# EUROPEAN PATENT APPLICATION

(11) **EP 4 629 384 A1**
(43) Date of publication of application: **08.10.2025**
(21) Application number: 23912435.7
(22) Date of filing: 16.08.2023
(51) Int. Cl.: H01M 10/0565, H01M 10/056, H01M 10/0562, H01M 4/139, H01M 10/058

(54) **ELECTRODE STRUCTURE FOR LITHIUM SECONDARY BATTERY AND MANUFACTURING METHOD THEREFOR**

(30) Priority: 26.12.2022 KR 20220184789; 14.08.2023 KR 20230106145
(71) Applicant: SK On Co., Ltd., Seoul 03161 (KR)
(72) Inventor: SHIN, Hyun Seop, Daejeon 34124 (KR); KIM, Byung Hyuk, Daejeon 34124 (KR); RYU, Hye Min, Daejeon 34124 (KR); PARK, Doe Hee, Daejeon 34124 (KR)
(74) Representative: Prüfer & Partner mbB Patentanwälte · Rechtsanwälte
(86) International application number: PCT/KR2023/012108
(87) International publication number: WO 2024/143749

(57) **Abstract**

An electrode structure for a lithium secondary battery according to exemplary embodiments includes a first electrode, a second electrode facing the first electrode, and a first electrolyte layer and a second electrolyte layer sequentially formed between the first electrode and the second electrode. The first electrolyte layer and the second electrolyte layer each include a polymer electrolyte and may have different compositions. The electrode structure may be manufactured using a heterogeneous curing process.

## Description

### [Technical Field]

The present disclosure relates to an electrode structure for a lithium secondary battery and a method for manufacturing the same.

### [Background Art]

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

A liquid electrolyte can be used as an electrolyte for a lithium secondary battery. However, when the liquid electrolyte is used, there are safety problems such as leakage, ignition, and explosion due to sudden environmental changes, including temperature fluctuations, external impacts and the like. To address these problems, attempts are being made to solidify the electrolyte, thereby enhancing safety and increasing energy density.

An all-solid-state battery may include an electrode assembly including a cathode, an anode, and an intermediate electrolyte layer, and may further include a separation membrane (separator) between the cathode and the anode. The all-solid-state battery may further include an outer case that accommodates the electrode assembly.

As the application scope of the all-solid-state battery continues to expand, longer cycle life, high capacity and higher energy density are required. However, when the separation membrane is included between the cathode and the anode, the volumetric energy density may decrease or the electronic and ionic conductivity may be reduced. When the separation membrane is removed between the cathode and the anode, a short-circuit may occur between the cathode and the anode.

### [Summary of Invention]

### [Problems to be Solved by Invention]

An object of the present disclosure is to provide an electrode structure for a lithium secondary battery with improved energy density and stability.

Another object of the present disclosure is to provide a method for manufacturing an electrode structure for a lithium secondary battery with improved energy density and stability.

### [Means for Solving Problems]

An electrode structure for a secondary battery according to exemplary embodiments may include: a first electrode; a first electrolyte layer formed on the first electrode and including a first polymer electrolyte; a second electrode disposed on the first electrolyte layer; and a second electrolyte layer formed between the first electrolyte layer and the second electrode and including a second polymer electrolyte. The first electrolyte layer and the second electrolyte layer may have different compositions or different thicknesses.

In some embodiments, the first polymer electrolyte may include a polymer of a photopolymerizable compound and a lithium salt, and the second polymer electrolyte may include a polymer of a thermosetting compound and a lithium salt.

In some embodiments, the second electrolyte layer may further include an oxide-based solid electrolyte.

In some embodiments, the first electrolyte layer may further include an oxide-based solid electrolyte. In some embodiments, a content (% by weight) of the oxide-based solid electrolyte in the first electrolyte layer may be lower than that of the oxide-based solid electrolyte in the second electrolyte layer.

In some embodiments, the content of the oxide-based solid electrolyte in the first electrolyte layer may be greater than 0% by weight and not more than 30% by weight based on a total weight of the first electrolyte layer.

In some embodiments, the content of the oxide-based solid electrolyte in the second electrolyte layer may be less than 70% by weight based on the total weight of the second electrolyte layer.

In some embodiments, the first electrolyte layer may not include an oxide-based solid electrolyte.

In some embodiments, the second electrolyte layer may not include the oxide-based solid electrolyte.

In some embodiments, a thickness of the second electrolyte layer may be greater than that of the first electrolyte layer.

In some embodiments, the first electrode may include a first electrode current collector and a first electrode active material layer formed on the first electrode current collector.

In some embodiments, the first electrode may include a first electrode current collector and a first electrode active material layer formed on the first electrode current collector.

In some embodiments, the second electrode may include a second electrode current collector and a second electrode active material layer formed on the second electrode current collector. In some embodiments, the second electrode active material layer may include the second polymer electrolyte.

In a method for manufacturing an electrode structure for a secondary battery according to exemplary embodiments, a first electrolyte composition may be applied to a first electrode, and the first electrolyte composition may be irradiated with light to form a first electrolyte layer. A second electrode may be disposed on the first electrolyte layer with a predetermined gap, and a second electrolyte composition may be injected to fill between the first electrolyte layer and the second electrode. The injected second electrolyte composition may be heated to form a second electrolyte layer.

In some embodiments, the first electrolyte composition and the second electrolyte composition may each include a lithium salt and an organic solvent.

In some embodiments, the first electrolyte composition may further include a photopolymerizable compound and a photoinitiator, and the second electrolyte composition may further include a thermosetting compound and a thermal initiator.

In some embodiments, the second electrolyte composition may further include an oxide-based solid electrolyte.

In some embodiments, the first electrolyte composition may further include an oxide-based solid electrolyte, and a content of the oxide-based solid electrolyte in the first electrolyte composition may be lower than that of the oxide-based solid electrolyte in the second electrolyte composition.

In some embodiments, the first electrolyte layer may not include an oxide-based solid electrolyte.

In some embodiments, the second electrolyte layer may not include the oxide-based solid electrolyte.

In some embodiments, a viscosity of the second electrolyte composition may be greater than that of the first electrolyte composition.

In some embodiments, a portion of the first electrolyte composition applied to the first electrode may be impregnated into the first electrode.

In some embodiments, a crosslinking network derived from the first electrolyte composition may be formed between the first electrolyte layer and the first electrode by irradiating the first electrolyte composition with light.

In some embodiments, when injecting the second electrolyte composition between the first electrolyte layer and the second electrode, a portion of the second electrolyte composition may be impregnated into the second electrode.

### [Advantageous effects]

The electrode structure for a secondary battery may include a solid electrolyte layer having a multi-layer structure between the first electrode and the second electrode. The ionic conductivity, as well as the mechanical and chemical stability of the electrode structure may be improved.

The first electrolyte composition may be applied to the first electrode and then photopolymerized to form a first electrolyte layer. Since the first electrolyte layer is directly formed on the first electrode, the lithium ionic conductivity of the first electrode may be improved, and the interfacial resistance between the first electrode and the first electrolyte layer may be reduced.

The second electrolyte composition may be injected between the first electrolyte layer and the second electrode, and then thermally polymerized to form the second electrolyte layer. Since the second electrolyte layer is directly formed on the second electrode, the interfacial resistance between the second electrode and the second electrolyte layer may be reduced, and the impregnation capability of the second electrolyte layer for the first electrode and the second electrode may be improved.

### [Brief Description of Drawings]

FIG. 1 is a schematic cross-sectional view illustrating an electrode structure for a lithium secondary battery according to exemplary embodiments.
FIG. 2 is a schematic flowchart for describing the processes of a method for manufacturing an electrode structure according to exemplary embodiments.
FIGS. 3 and 4 are schematic cross-sectional views each illustrating a portion of the electrode structure according to exemplary embodiments.
FIG. 5 is a schematic perspective view illustrating a method for manufacturing an electrode structure according to exemplary embodiments.
FIG. 6 is an SEM image showing a cross-section of an electrode structure according to Example 1.
FIG. 7 is an SEM image showing a cross-section of a first electrolyte layer and a second electrolyte layer of the electrode structure according to Example 1.
FIG. 8 is an SEM image showing a cross-section of a first electrolyte layer and a second electrolyte layer of an electrode structure according to Comparative Example 1.
FIG. 9 is a graph illustrating the discharge capacity according to the cycle number of a secondary battery according to the examples and comparative examples.

### [Mode for Carrying out Invention]

According to the embodiments of the present disclosure, an electrode structure including electrodes facing each other and an electrolyte layer formed between the electrodes is provided.

In addition, according to the embodiments of the present disclosure, a method for manufacturing the electrode structure described above is also provided.

Hereinafter, embodiments of the present disclosure will be described in more detail. However, the following drawings attached to the present specification illustrate embodiments of the present disclosure, and serve to further understand the technical spirit of the present disclosure together with the above-described contents of the invention, such that the present disclosure should not be construed as being limited only to the illustrations of the drawings.

The terms "upper surface," "lower surface," "first," "second," etc. as used herein indicate the relative positional relationship of respective components and do not refer to an absolute upper-lower relationship.

Hereinafter, unless otherwise defined herein, when a portion such as a layer, film, thin-film, region, or plate, etc. is present "on" or "above" another portion, this may include not only the case where the portion is directly on the other portion but also the case where another portion is interposed between them.

Hereinafter, as used herein, the term "polymer" includes oligomers and encompasses both homopolymers and copolymers. The copolymers may include alternating copolymers, block copolymers, random copolymers, branched copolymers, crosslinked copolymers, or combinations thereof.

Hereinafter, as used herein, the term "polymer electrolyte" may refer not only to an all-solid-state electrolyte, but also to a gel polymer electrolyte in which a liquid electrolyte is included in a polymer-based matrix. For example, the gel polymer electrolyte may be a physical gel formed by swelling a polymer matrix with an electrolyte, or a chemical gel prepared by curing a composition including an electrolyte and a monomer, depending on the method of preparation.

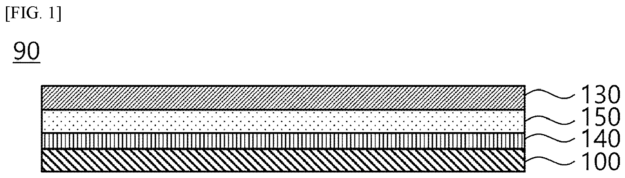

FIG. 1 is a schematic cross-sectional view illustrating an electrode structure for a lithium secondary battery according to exemplary embodiments.

Referring to FIG. 1, the electrode structure for a lithium secondary battery (hereinafter, also abbreviated as the "electrode structure") may include a first electrode 100, a first electrolyte layer 140 formed on the first electrode 100, a second electrode 130 disposed on the first electrolyte layer 140, and a second electrolyte layer 150 formed between the first electrolyte layer 140 and the second electrode 130.

The first electrode 100 and the second electrode 130 may each include an electrode active material capable of intercalating and deintercalating lithium ions.

For example, the first electrode 100 and the second electrode 130 may each include an electrode current collector and an electrode active material layer formed on at least one surface of the electrode current collector. The electrode active material layer includes an electrode active material, and may further include a conductive material, a binder or a solid electrolyte.

In one embodiment, the first electrode 100 or the second electrode 130 may be a lithium electrode formed of lithium metal or a lithium alloy. For example, the lithium secondary battery may be provided as a lithium metal battery.

The first electrolyte layer 140 and the second electrolyte layer 150 may each include a polymer electrolyte. For example, the first electrolyte layer 140 may be a solid electrolyte layer including a first polymer electrolyte, and the second electrolyte layer 150 may be a solid electrolyte layer including a second polymer electrolyte.

An electrode structure 90 may include a solid electrolyte layer interposed between electrodes facing each other, such that the ionic conductivity of the electrode structure may be increased even without additionally injecting a liquid electrolyte, such as a lithium salt and an organic solvent, into the battery. Accordingly, the output and capacity characteristics of the secondary battery may be improved.

In addition, the mechanical stability of the electrode structure 90, such as thermal/chemical stability and puncture stability, may be improved, while preventing leakage, ignition, and vaporization caused by the liquid electrolyte.

According to exemplary embodiments, the first electrolyte layer 140 may be formed through a photopolymerization process, and the second electrolyte layer 150 may be formed through a thermal polymerization process.

For example, the first polymer electrolyte may include a polymer of a photopolymerizable compound, and the second polymer electrolyte may include a polymer of a thermosetting compound.

The photopolymerizable compound may contain a photoreactive functional group, and may be crosslinked upon irradiation with light. The thermosetting compound may contain a heat-reactive functional group and may form a crosslinking network through heat treatment.

In some embodiments, a content of the polymer included in each of the first electrolyte layer 140 and the second electrolyte layer 150 may be 1% by weight ("wt%") to 80 wt% based on the total weight of each electrolyte layer, for example, 5 wt% to 80 wt%, 5 wt% to 50 wt%, 10 wt% to 40 wt%, or 10 wt% to 30 wt%.

Within the above range, the stability and mechanical properties of the electrolyte layer may be further improved, and a decrease in ionic conductivity due to an excessive amount of polymer may be prevented.

In one embodiment, each of the first polymer electrolyte and/or the second polymer electrolyte may include a lithium salt and/or a solvent. The lithium salt may provide additional pathways for lithium ion migration within the electrolyte layer, thereby further improving the output characteristics of the secondary battery.

The lithium salt may be selected from LiPF₆, LiClO₄, LiBF₄, LiFSI, LiTFSI, LiSO₃CF₃, LiBOB, LiFOB, LiDFOB, LiDFBP, LiTFOP, LiPO₂F₂, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, LiSCN, LiC(CF₃SO₂)₃, or a combination thereof.

The solvent may be selected from the group consisting of ethylene carbonate (EC), propylene carbonate (PC), dimethyl carbonate (DMC), diethyl carbonate (DEC), ethyl methyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or a combination thereof, but it is not limited thereto.

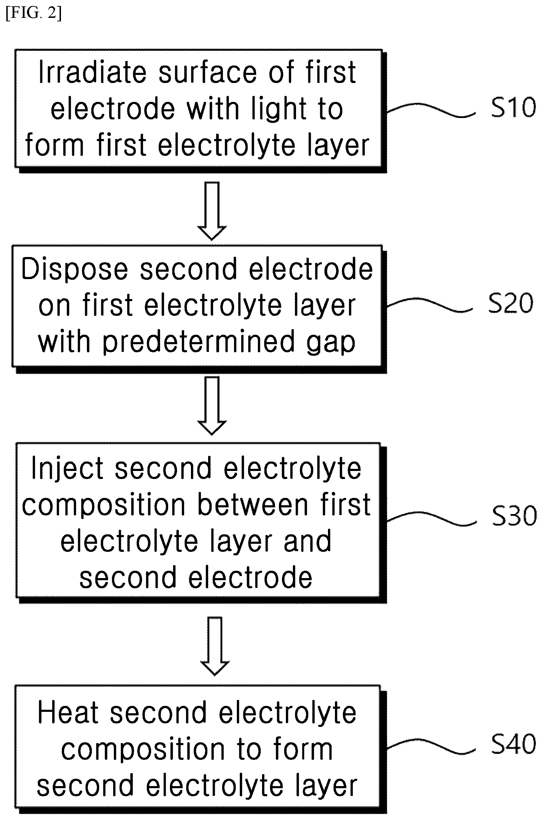

FIG. 2 is a schematic flowchart for describing the processes of a method for manufacturing an electrode structure according to exemplary embodiments. Hereinafter, the method for manufacturing an electrode structure will be described with reference to FIG. 2.

Referring to FIG. 2, a first electrolyte composition may be applied to at least one surface of the first electrode 100, and a polymerization reaction may be performed on the first electrolyte composition to form the first electrolyte layer 140 (e.g., step S10).

The first electrolyte layer 140 may be formed directly on the first electrode 100, thereby reducing the interfacial resistance between the first electrode 100 and the first electrolyte layer 140. For example, when the first electrode 100 and the first electrolyte layer 140 are physically pressed or bonded, the interfacial adhesion may be low, and cracks or fractures may occur due to external forces.

As a method for applying the first electrolyte composition, for example, gravure coating, die coating, multi-die coating, dip coating, comma coating, or the like may be used.

According to exemplary embodiments, the first electrolyte composition may be photopolymerized to form the first electrolyte layer 140. For example, the first electrolyte composition may include a photopolymerizable compound and a photoinitiator.

Since the first electrolyte layer 140 is formed through a photopolymerization reaction, the curing process of the electrolyte layer may be performed at a relatively low temperature. Accordingly, damage to the first electrode 100 due to high-temperature heat treatment may be prevented.

The photopolymerizable compound may include, for example, ethoxylated trimethylolpropane triacrylate, 1,3-butanediol di(meth)acrylate, diethylene glycol di(meth)acrylate, ethylene glycol di(meth)acrylate, dipropylene glycol di(meth)acrylate, ethylene glycol divinyl ether, diethylene glycol divinyl ether, diethylene glycol diglycidyl ether, glycidyl(meth)acrylate, triethylene glycol di(meth)acrylate, pentaerythritol tri(meth)acrylate, pentaerythritol tetra(meth)acrylate, trimethylolpropane tri(meth)acrylate, polyethylene glycol diglycidyl ether, polyethylene glycol di(meth)acrylate, polypropylene glycol di(meth)acrylate, polyethylene-polypropylene glycol di(meth)acrylate, or a combination thereof, but it is not limited to these.

The photoinitiator may include acyl phosphines such as 2-hydroxy-2-methyl-1-phenylpropan-1-one (HMPP), benzoin ether, dialkyl acetophenone, hydroxyalkyl ketone, phenyl glyoxylate, benzyl dimethyl ketal, 2,4,6-trimethyl-benzoyl-trimethyl phosphine oxide, and α-aminoketones, etc.

In some embodiments, the curing process for the photopolymerization reaction may be performed using light having a wavelength of 200 nm to 405 nm and an intensity of 200 mW/cm² to 1500 mW/cm². In one embodiment, the curing process may be performed for 5 seconds to 10 minutes.

In one embodiment, the curing process may be performed using a UV lamp. For example, the UV lamp may include a mercury UV lamp, a metal UV lamp, an LED lamp or the like.

In some embodiments, the content of the photopolymerizable compound in the first electrolyte composition may be 1 wt% to 80 wt%, 5 wt% to 50 wt%, or 10 wt% to 40 wt% based on the total weight of the first electrolyte composition. Within the above range, the mechanical properties and ionic conductivity of the first electrolyte layer 140 may be simultaneously improved.

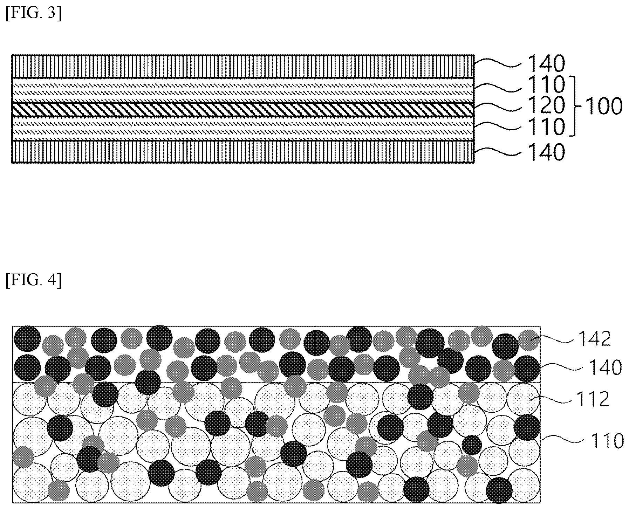

FIGS. 3 and 4 are schematic cross-sectional views each illustrating a portion of the electrode structure according to exemplary embodiments.

Referring to FIGS. 3 and 4, the first electrode 100 may include an electrode current collector 120 and an electrode active material layer 110 formed on the electrode current collector 120. The electrode active material layer 110 may be formed on both surfaces (e.g., upper and lower surfaces) of the electrode current collector 120.

The first electrolyte layer 140 may be formed on the electrode active material layer 110. For example, the first electrolyte composition may be applied to the upper surface of the electrode active material layer 110 and then photopolymerized to form the first electrolyte layer 140.

In some embodiments, the first electrode 100 may include a first polymer electrolyte. For example, a portion of the polymer electrolyte 142 included in the first electrolyte layer 140 may be infiltrated into or diffused into the first electrode 100.

In one embodiment, during the process of applying the first electrolyte composition to the upper surface of the electrode active material layer 110, a portion of the first electrolyte composition may be impregnated into the electrode active material layer 110. For example, the lithium salt, photopolymerizable compound, and/or photoinitiator of the first electrolyte composition may migrate/be diffused between the electrode active materials 112.

During the process of irradiating the first electrolyte composition with light, the photopolymerizable compound impregnated into the electrode active material layer 110 may also be polymerized. Accordingly, a crosslinking network derived from the photopolymerizable compound may be formed between the first electrolyte layer 140 and the electrode active material layer 110.

In one embodiment, the first electrode 100 and the first electrolyte layer 140 may be substantially integrated or integrally formed by the cross-linking network. Accordingly, the interfacial resistance between the first electrode 100 and the first electrolyte layer 140 may be further reduced. In addition, since the first electrode 100 includes a polymer electrolyte, an additional ion migration pathway may be further formed within the first electrode 100, and ionic conductivity may be further improved.

The second electrode 130 may be disposed on the first electrode 100 having the first electrolyte layer 140 formed thereon (for example, step S20). The second electrode 130 may be disposed to face the first electrolyte layer 140.

In one embodiment, the second electrode 130 may be disposed spaced apart from the first electrolyte layer 140 with a predetermined gap. For example, a gap may be formed between the first electrolyte layer 140 and the second electrode 130. A preliminary electrode structure or preliminary electrode cell may be defined by the first electrode 100, the first electrolyte layer 140, and the second electrode 130. In one embodiment, a porous support may be used to support the preliminary electrode structure.

The second electrolyte composition may be injected or introduced into the preliminary electrode structure (e.g., step S30).

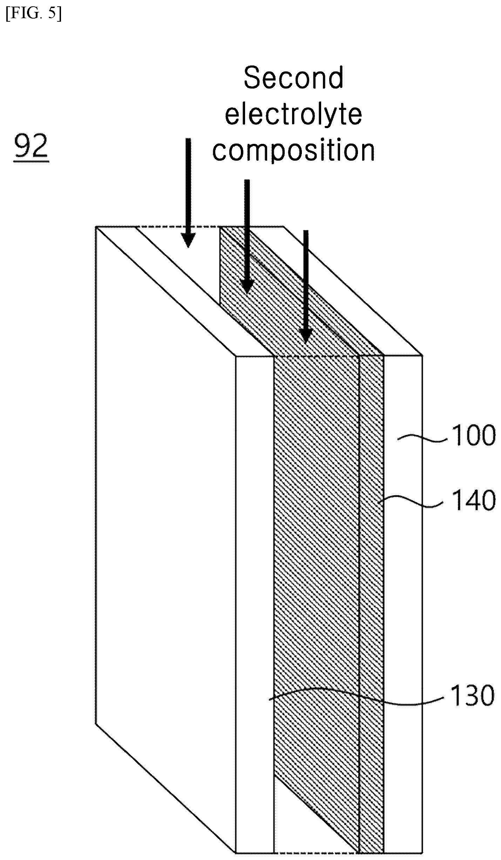

FIG. 5 is a schematic perspective view illustrating a method for manufacturing an electrode structure according to exemplary embodiments.

Referring to FIG. 5, the second electrolyte composition may be injected between the first electrolyte layer 140 and the second electrode 130 of the preliminary electrode structure 92.

According to exemplary embodiments, the second electrolyte composition may be injected to fill the gap between the first electrolyte layer 140 and the second electrode 130. For example, the second electrolyte composition injected into the preliminary electrode structure 92 may cover both the surface of the first electrolyte layer 140 and the surface of the second electrode 130.

The preliminary electrode structure 92 into which the second electrolyte composition has been injected may be heat-treated to form the second electrolyte layer 150 (e.g., step S40). The second electrolyte composition may be polymerized or crosslinked through the heat treatment.

For example, the second electrolyte composition may include a thermosetting compound and a thermal initiator.

The thermosetting compound may include a substance that is substantially the same as or similar to the above-described photopolymerizable compound. For example, the thermosetting compound may include ethoxylated trimethylolpropane triacrylate, 1,3-butanediol di(meth)acrylate, ethylene glycol di(meth)acrylate, ethylene glycol divinyl ether, glycidyl(meth)acrylate, pentaerythritol tri(meth)acrylate, pentaerythritol tetra(meth)acrylate, polyethylene glycol diglycidyl ether, polyethylene glycol di(meth)acrylate, polypropylene glycol di(meth)acrylate, polyethylene-polypropylene glycol di(meth)acrylate, and the like.

The thermal initiator may include: azo-based compounds such as 2,2-azobis(2-cyanobutane), 2,2-azobis(methylbutyronitrile), 2,2'-azoisobutyronitrile (AIBN), azobisdimethylvaleronitrile (AMVN), etc.; peroxide-based compounds such as benzoyl peroxide, acetyl peroxide, dilauryl peroxide, di-tert-butyl peroxide, cumyl peroxide, hydrogen peroxide, etc.

A polymerization reaction may be performed while the injected second electrolyte composition is present between the first electrolyte layer 140 and the second electrode 130, so that the second electrolyte layer 150 may be directly formed on the first electrolyte layer 140 and the second electrode 130. Accordingly, the adhesion between the first electrolyte layer 140 and the second electrolyte layer 150 and the adhesion between the second electrolyte layer 150 and the second electrode 130 may be simultaneously increased, and the overall interfacial resistance of the electrode structure may be reduced.

For example, when the electrolyte layers formed individually in the form of films are physically or thermally bonded and pressed, the adhesion at the interface between the electrolyte layers may be reduced. When the electrolyte layers include a solid-state electrolyte, their elasticity or flexibility may be relatively insufficient, which may cause more severe delamination at the interfaces during charging and discharging. Therefore, the interfacial resistance may gradually increase due to repeated charging and discharging. Furthermore, cracks may be generated in the electrode structure due to physical external forces applied during the pressing of the electrolyte layers. Accordingly, the electrochemical characteristics and stability of the electrode structure may be degraded.

According to exemplary embodiments, since the second electrolyte layer 150 is formed directly on the first electrolyte layer 140 and the second electrode 130, for example, a cross-linking network may be formed at each interface, or adhesion may be further enhanced. Accordingly, the interfacial resistance and the overall internal resistance within the electrode structure 90 may be reduced, and the electrode structure 90 may have a substantially integrated structure, thereby maintaining structural stability even during repeated charging and discharging.

In addition, since the second electrolyte layer 150 is formed by a thermal polymerization reaction, the crosslink density and mechanical properties of the second electrolyte layer 150 may be further improved. For example, when a photopolymerization reaction is performed on the second electrolyte composition, the first electrolyte layer 140 and the second electrode 130 may block or interfere with the irradiated light, which may reduce the polymerization efficiency.

In some embodiments, the second electrode 130 may include a second polymer electrolyte. For example, during the process of injecting the second electrolyte composition into the preliminary electrode structure 92, a portion of the second electrolyte composition may be impregnated into the electrode active material layer of the second electrode 130.

Accordingly, the adhesion between the second electrolyte layer 150 and the second electrode 130 may be further improved, and the interfacial resistance may be further reduced. In addition, due to the polymer electrolyte impregnated into the second electrode 130, the ionic conductivity of the second electrode 130 may be further improved.

In some embodiments, the thermal polymerization reaction of the second electrolyte composition may be performed at a temperature of 30 °C to 80 °C for 30 minutes to 24 hours.

In some embodiments, the content of the thermosetting compound in the second electrolyte composition may be 1 wt% to 80 wt% based on the total weight of the second electrolyte composition, for example, 5 wt% to 50 wt%, or 10 wt% to 40 wt%. Within the above range, the stability and mechanical properties of the electrolyte layer may be further improved, and a decrease in ionic conductivity due to an excessive amount of polymer may be prevented.

According to exemplary embodiments, the electrode structure 90 may not include a separation membrane. For example, since the first electrolyte layer 140 is formed on the first electrode 100, a short-circuit between the first electrode 100 and the second electrode 130 may be prevented even in the absence of the separation membrane.

For example, when an electrolyte composition is injected between the electrodes facing each other, a short-circuit may occur between the electrodes. To prevent short-circuits, a porous support, such as a separation membrane, may be interposed between the electrodes. However, a non-capacitive region may be formed between the electrodes due to the separation membrane having low ionic conductivity. In this case, the output characteristics and energy density of the lithium secondary battery may be reduced.

According to exemplary embodiments, the first electrolyte layer 140 may substantially prevent short-circuiting within the electrode structure 90, such that the electrode structure 90 may omit a separation membrane. Accordingly, a lithium secondary battery having high output and large capacity may be provided.

In some embodiments, the first electrolyte layer 140 may fully cover the surface of the first electrode 100 facing the second electrode 130. Accordingly, direct contact between the first electrode 100 and the second electrode 130 may be prevented, thereby further improving the fire safety of the electrode structure.

In some embodiments, the first electrolyte composition and the second electrolyte composition may include a lithium salt, an organic solvent or a plasticizer. For example, the first electrolyte composition and the second electrolyte composition may include a liquid electrolyte.

In one embodiment, the content of the lithium salt included in each of the first electrolyte composition and the second electrolyte composition may be 0.01 M to 5 M based on each electrolyte composition, for example, 0.1 M to 3 M. Within the above range, the resistance and ionic conductivity of the electrolyte layer may be further improved without deterioration in thermal or chemical stability.

In some embodiments, the second electrolyte composition may further include an oxide-based solid electrolyte. In one embodiment, the first electrolyte composition may also include an oxide-based solid electrolyte.

The oxide-based solid electrolyte may exhibit high ionic conductivity, thereby improving the ionic conductivity of the electrolyte layers 140 and 150. For example, the oxide-based solid electrolyte may compensate for the ionic conductivity of the polymer electrolyte, such that the output characteristics and capacity characteristics of the secondary battery may be improved, and safety may be further improved.

According to exemplary embodiments, the content (wt%) of the oxide-based solid electrolyte in the first electrolyte composition may be smaller than the content (wt%) of the oxide-based solid electrolyte in the second electrolyte composition. For example, the content of the oxide-based solid electrolyte in the first electrolyte layer 140 may be smaller than that of the oxide-based solid electrolyte in the second electrolyte layer 150.

The oxide-based solid electrolyte has a high reflectivity to light, so that as the content of the oxide-based solid electrolyte increases, the light reflection of the electrolyte composition may also increase. As the light irradiated onto the electrolyte composition is reflected by the oxide-based solid electrolyte, the photopolymerizable compound or photoinitiator may not transmit or absorb sufficient light energy. In this case, fewer radicals or active molecules may be formed within the electrolyte composition, which may reduce polymerization reactivity and decrease the polymerization rate and crosslink density.

According to exemplary embodiments, since the second electrolyte layer 150 is formed through a thermal polymerization reaction, even if the content of the oxide-based solid electrolyte in the second electrolyte composition is high, the polymerization reaction rate and crosslink density may be still maintained at a high level.

The first electrolyte composition, which undergoes a photopolymerization reaction, may include a relatively low content of the oxide-based solid electrolyte, thereby preventing a reduction in the polymerizability and mechanical stability of the first electrolyte layer 140. In addition, since the second electrolyte composition may include a relatively high content of the oxide-based solid electrolyte, the ionic conductivity of the electrode structure 90 may be compensated for, and the output and capacity of the secondary battery may be further improved.

In some embodiments, the content of the oxide-based solid electrolyte in the first electrolyte composition may be 30 wt% or less based on the total weight of the first electrolyte composition. For example, the content of the oxide-based solid electrolyte in the first electrolyte layer 140 may be 30 wt% or less based on the total weight of the first electrolyte layer.

In one embodiment, the content of the oxide-based solid electrolyte in the first electrolyte composition may be greater than 0 wt% and not more than 30 wt%, greater than 0 wt% and not more than 20 wt%, greater than 0 wt% and not more than 10 wt%, or greater than 0 wt% and not more than 5 wt% based on the total weight of the first electrolyte composition.

If the content of the oxide-based solid electrolyte in the first electrolyte composition exceeds 30 wt%, the crosslink density and polymerizability of the first electrolyte layer 140 may be reduced.

In some embodiments, the content of the oxide-based solid electrolyte in the second electrolyte composition may be less than 70 wt% based on the total weight of the second electrolyte composition. For example, the content of the oxide-based solid electrolyte in the second electrolyte layer 150 may be less than 70 wt% based on the total weight of the second electrolyte layer.

In one embodiment, the content of the oxide-based solid electrolyte in the second electrolyte composition may be greater than 0 wt% and less than 70 wt%, greater than 10 wt% and less than 70 wt%, or greater than 20 wt% and up to 50 wt% based on the total weight of the second electrolyte composition.

Within the above range, the mechanical properties and structural stability of the second electrolyte layer 150 may be further improved, and the ionic conductivity and output characteristics of the secondary battery may be further enhanced.

In some embodiments, the first electrolyte layer 140 or the first electrolyte composition may not include an oxide-based solid electrolyte. In one embodiment, the second electrolyte layer 150 or the second electrolyte composition may also not include an oxide-based solid electrolyte.

In some embodiments, the oxide-based solid electrolyte may include a metal oxide or an ion-conductive compound containing oxygen.

Examples of the oxide-based solid electrolyte may include metal oxides such as Al₂O₃, ZnO₂, Ce₂O₃, TiO₂, ZrO₂, HfO₂, MnO₂, MgO, WO₂, and V₂O₅, etc., garnet-based compounds, perovskite-based compounds, NASICON-based compounds, LIPON-based compounds, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, etc.

The NASICON compound may include a phosphate compound, and for example, may include lithium aluminium germanium phosphate (LAGP) compounds such as Li₁₊ₓAlₓGe₂₋ₓ(PO₄)₃ (0<x<2), or a lithium aluminum titanium phosphate (LATP) compound such as Li₁₊ₓAlₓTi₂₋ₓ(PO₄)₃ (0<x<2), Li₁₊ₓTi_{2-x-y}AlₓSi_{y}(PO₄)_{3-y} (0≤x≤1, 0<y≤1), LiAlₓZr₂₋ₓ(PO₄)₃ (0≤x≤1, 0≤y≤1), LiTiₓZr₂₋ₓ(PO₄)₃ (0≤x≤1, 0≤y≤1).

The perovskite compound may include a lithium lanthanum titanate (LLTO) compound such as Li_{0.5}La_{0.5}TiO₃.

The garnet compound may include a lithium lanthanum zirconium oxide (LLZO) compound. For example, the LLZO compound may include an oxide represented by Formula 1 below.

[Formula 1] Li_{7-3x+y-z}AₓLa_{3-y}B_{y}Zr_{2-z}M_{z}O₁₂

In Formula 1, x, y and z may satisfy 0≤x≤1, 0≤y≤1, 0≤z≤1, A may be a doping element substituted at the Li site, B may be a doping element substituted at the La site, and M may be a doping element substituted at the Zr site. A and B may each independently include at least one selected from the group consisting of aluminum (Al), gallium (Ga), barium (Ba), magnesium (Mg), calcium (Ca), strontium (Sr), potassium (K), cerium (Ce), and rubidium (Rb). M may include at least one selected from the group consisting of molybdenum (Mo), tungsten (W), antimony (Sb), yttrium (Y), niobium (Nb) and tantalum (Ta).

In some embodiments, when the electrode structure 90 includes an oxide-based solid electrolyte, the total content of the oxide-based solid electrolyte may be 5 wt% or more, 10 wt% or more, or 15 wt% or more, and may be 50 wt% or less, 40 wt% or less, or 30 wt% or less, based on the total weight of the first electrolyte layer 140 and the second electrolyte layer 150. Within the above range, the high-rate characteristics and output characteristics of the electrode structure 90 may be further improved while preventing deterioration in the thermal and chemical stability of the electrolyte layer.

In some embodiments, the first electrolyte layer 140 or the second electrolyte layer 150 may further include a sulfide-based solid electrolyte.

For example, the sulfide-based solid electrolyte may be an LPS-based solid electrolyte containing Li, P and S, an LGPS-based solid electrolyte containing Li, P, Ge and S, or an LSiPSCl-based solid electrolyte containing Li, Si, P, S and Cl.

For example, as the sulfide-based solid electrolyte, Li₂S-P₂S₅, Li₁₀GeP₂S₁₂, Li₁₀SnP₂S₁₂, Li_{9.54}Si_{1.74}P_{1.44}S_{11.7}Cl_{0.3}, Li₁₀(Si_{0.3}Ge_{0.3})P₂S₁₂, Li₁₀(Ge_{0.5} Sn_{0.5})P₂S₁₂, Li₁₀(Si_{0.5}Sn_{0.5})P₂S₁₂, Li₁₀GeP₂S_{11.7}O_{0.3}, Li_{9.6}P₃S₁₂, Li₉P₃S₉O₃, Li_{10.35}Ge_{1.35}P_{1.65}S₁₂, Li_{10.35}Si_{1.35}P_{1.65}S₁₂, Li_{9.81}Sn_{0.81}P_{2.19}S₁₂, Li_{9.42}Si_{1.02}P_{2.1}S_{9.96}O_{2.04}, Li₆PS₅Cl, etc. may be used.

In one embodiment, the viscosity of the second electrolyte composition may be greater than that of the first electrolyte composition. For example, the second electrolyte composition may contain a relatively high content of an oxide-based solid electrolyte, which may increase viscosity of the second electrolyte composition.

In one embodiment, the first electrolyte layer 140 may have a thickness of 10 µm to 100 µm, for example, 40 µm to 80 µm, or 10 µm to 50 µm. Within the above range, the ionic conductivity may be improved while preventing an increase in resistance and short-circuits, thereby further enhancing the output characteristics of the secondary battery.

In one embodiment, the second electrolyte layer 150 may have a thickness of 10 µm to 150 µm, for example, 50 µm to 120 µm, or 20 µm to 50 µm. Within the above range, the low-resistance characteristics and mechanical properties of the second electrolyte layer 150 may be further improved, and the capacity and cycle life characteristics of the secondary battery may be further increased.

In some embodiments, the thickness of the second electrolyte layer 150 may be greater than that of the first electrolyte layer 140. Since the first electrolyte layer 140 has a thin thickness, the volumetric energy density and the low-resistance characteristics of the electrode structure may be further improved while preventing a short-circuit between the first electrode and the second electrode.

The second electrolyte layer 150 may serve as a support layer between the first electrode and the second electrode. Accordingly, since the second electrolyte layer 150 has a relatively large thickness, the elasticity, physical strength, and crack resistance of the second electrolyte layer 150 may be further improved.

In one embodiment, the thickness of the first electrolyte layer 140 may be greater than that of the second electrolyte layer 150. For example, the second electrolyte composition may be pressed and then heat-treated to form the second electrolyte layer 150 with a relatively thin thickness.

In some embodiments, the first electrode 100 may be a lithium electrode, and the second electrode 200 may be a cathode or an anode having an electrode active material layer. For example, in the case of thermal polymerization, the time required for the polymerization reaction may be relatively long. Accordingly, since the second electrode 200 has a porous electrode active material layer, electrolyte impregnation into the second electrode 200 may increase during the polymerization reaction.

In some embodiments, the first electrode 100 may be a cathode. For example, the first electrode 100 may include a cathode current collector and a cathode active material layer formed on the cathode current collector. The second electrode 130 may be an anode or a lithium electrode.

The cathode collector may include, for example, stainless steel, nickel, aluminum, titanium, copper, or an alloy thereof, and may include, for example, aluminum or an aluminum alloy.

The cathode active material layer may include a cathode active material. Examples of the cathode active material may include at least one compound selected from a lithium iron phosphate compound, a lithium cobalt oxide, a lithium manganese oxide, a lithium nickel oxide, or a lithium composite oxide. For example, the cathode active material may include layered compounds such as lithium cobalt oxide (LiCoO₂) or lithium nickel oxide (LiNiO₂); a lithium manganese oxide such as LiMnO₃, LiMn₂O₃, and LiMnO₂; a lithium copper oxide (Li₂CuO₂); a vanadium oxide such as LiV₃O₈, LiFe₃O₄, V₂O₅, and Cu₂VO₇; and a lithium iron phosphate oxide such as LiFePO₄.

In some embodiments, the cathode active material may include a compound represented by Formula 2 below.

[Formula 2] LiₐNi_{b}M_{1-b}O₂

In Formula 2, a and b may satisfy 0.95≤a≤1.08, b≥0.5, and M may be at least one element of Na, Mg, Ca, Y, Ti, Zr, Hf, V, Nb, Ta, Cr, Mo, W, Mn, Co, Fe, Cu, Ag, Zn, B, Al, Ga, C, Si, Sn and Ba.

In one embodiment, the cathode active material includes nickel (Ni) and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it can be disadvantageous in terms of mechanical and electrical stabilities.

In one embodiment, the conductivity or resistance of the lithium secondary battery may be improved by cobalt (Co), as well as the mechanical and electrical stabilities of the lithium secondary battery may be improved by manganese (Mn).

The chemical structure represented by Formula 2 shows a bonding relationship between elements included in the lattice structure or crystal structure of the cathode active material, and does not exclude other additional elements. For example, M may be provided as a main active element of the cathode active material. Here, it should be understood that Formula 2 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the crystal structure. The auxiliary element may be incorporated into the crystal structure together to form a bond, and it should be understood that this case is also included within the chemical structure represented by Formula 2.

According to exemplary embodiments, the cathode active material layer may further include a conductive material.

The conductive material may be included to promote electron migration between the cathode active material particles. For example, the conductive material may include carbon-based conductive materials such as graphite, carbon black, graphene, carbon nanotubes, and/or metal-based conductive materials, including perovskite materials, such as tin, tin oxide, titanium oxide, LaSrCoO₃, and LaSrMnO₃, etc.

In some embodiments, the cathode active material layer may further include a cathode binder. For example, the cathode binder may include an organic binder such as vinylidene fluoride-hexafluoropropylene copolymer (PVDF-co-HFP), polyvinylidene fluoride (PVDF), polyacrylonitrile, polymethylmethacrylate, etc.; or an aqueous binder such as styrene-butadiene rubber (SBR).

In some embodiments, the first electrode 100 may be an anode. For example, the first electrode 100 may include an anode current collector and an anode active material layer formed on the anode current collector. The second electrode 130 may be a cathode or a lithium electrode.

The anode current collector may include gold, stainless steel, nickel, aluminum, titanium, copper, or an alloy thereof, for example, copper or a copper alloy.

The anode active material may include a material capable of intercalating and deintercalating lithium ions. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at 1500 °C or lower, mesophase pitch-based carbon fiber (MPCF) or the like. Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicon, lead, tin, gallium, indium or the like.

The anode active material layer may further include an anode binder and/or an anode conductive material. The anode binder and the conductive material may be substantially the same as or similar to the above-described cathode binder and the conductive material. The anode binder may be, for example, an aqueous binder such as styrene-butadiene rubber (SBR). The anode binder may be used together with a thickener such as carboxymethyl cellulose (CMC).

Electrode tabs (a cathode tab and an anode tab) may protrude from the cathode current collector and the anode current collector, respectively, and may extend to one side of a case of the secondary battery. The electrode tabs may be fused together with the one side of the case to form electrode leads (a cathode lead and an anode lead) that extend or are exposed to the outside of the case.

A lithium secondary battery according to exemplary embodiments may include the above-described electrode structure. For example, the lithium secondary battery may be provided as an all-solid-state battery.

According to exemplary embodiments, an electrode cell is defined by the above-described electrode structure, and a plurality of the electrode cells may be stacked to form an electrode assembly.

In one embodiment, since a separation membrane is not interposed between the first electrode and the second electrode, an electrode assembly may be formed by stacking a plurality of electrode structures. Therefore, no space is required for winding or folding the separation membrane, and the internal space efficiency of the electrode assembly may be improved, thereby increasing the capacity.

In addition, the first electrolyte layer is directly formed on the first electrode, and the second electrolyte layer is directly formed on the first electrolyte layer and the second electrode, thereby preventing an internal short-circuit that may occur due to misalignment of the electrode structures.

The electrode assembly may be accommodated in a case to define a lithium secondary battery. The lithium secondary battery may be manufactured, for example, in a cylindrical shape using a can, a prismatic shape, a pouch shape or a coin shape.

The lithium secondary battery according to the embodiments of the present disclosure may be widely applied in green technology fields, such as electric vehicles, battery charging stations, as well as solar power generation, wind power generation, and the like, which use the batteries. In addition, the lithium secondary battery according to the embodiments of the present disclosure may be used used in eco-friendly electric vehicles, hybrid vehicles, and the like, which are aimed at mitigating climate change by reducing air pollution and greenhouse gas emission.

Hereinafter, embodiments of the present invention will be further described with reference to specific experimental examples. However, the following examples and comparative examples included in the experimental examples are only given for illustrating the present invention and those skilled in the art will obviously understand that various alterations and modifications are possible within the scope and spirit of the present invention. Such alterations and modifications are duly included in the appended claims.

### Preparative Example 1

### (1) Preparation of photocurable electrolyte layer (first electrolyte layer)

1.0 M LiPF₆ was dissolved in an organic solvent having a composition of EC/EMC (3:7, v/v), and then 2 parts by weight ("wt parts") of FEC was added based on 100 wt parts of the organic solvent to prepare a liquid electrolyte.

The photocurable electrolyte was prepared by mixing PEGDA (poly(ethylene glycol) diacrylate) as a photopolymerizable compound and HMPP (2-Hydroxy-2-methylpropiophenone) as a photoinitiator with the liquid electrolyte. The liquid electrolyte and PEGDA were mixed in a weight ratio of 8:2. HMPP was added at 1 wt part based on 100 wt parts of PEGDA.

The prepared photocurable electrolyte and oxide solid electrolyte were mixed in the ratio (weight ratio) shown in Table 1 below to prepare a photocurable electrolyte composition. Al-doped LLZO (Li₇La₃Zr₂O₁₂, Ampcera) was used as the oxide solid electrolyte.

After applying 1 ml of the photocurable electrolyte composition to a release film, a polymerization reaction was performed by irradiating the composition with UV light having a wavelength of 365 nm and an intensity of 1000 mW/cm² using an LED lamp for 10 seconds, thereby preparing a solid electrolyte membrane.

During the preparation process, whether the photocurable electrolyte composition formed a slurry and whether the solid electrolyte membrane was crosslinked were observed, as shown in Table 1 below.

### (2) Preparation of thermosetting electrolyte layer (second electrolyte layer)

1.0 M LiPF₆ was dissolved in an organic solvent having a composition of EC/EMC (3:7, v/v), and 2 wt parts of FEC was added based on 100 wt parts of the organic solvent to prepare a liquid electrolyte.

The thermosetting electrolyte was prepared by mixing PEGDA as a thermosetting compound and t-BPP (tert-butyl peroxypivalate) as a thermal initiator with the liquid electrolyte. The liquid electrolyte and PEGDA were mixed in a weight ratio of 9:1. t-BPP was added at 1 wt part based on 100 wt parts of PEGDA.

The prepared thermosetting electrolyte and oxide solid electrolyte were mixed in the ratio (weight ratio) shown in Table 2 below to prepare a thermosetting electrolyte composition. Al-doped LLZO (Li₇La₃Zr₂O₁₂, Ampcera) was used as the oxide solid electrolyte.

1 ml of the thermosetting electrolyte composition was applied to a release film, and a crosslinking reaction was performed in a vacuum oven at a temperature of 60 °C for 30 minutes to prepare a solid electrolyte membrane.

During the preparation process, whether the thermosetting electrolyte composition formed a slurry and whether the solid electrolyte membrane was crosslinked were observed, and the results are shown in Table 2 below.

**[TABLE 1]**

| Photocurable electrolyte layer | Electrolyte: Oxide (Weight ratio) | Slurry formation | Crosslinking |
|---|---|---|---|
| Composition 1 | 10:0 | ○ | ○ |
| Composition 2 | 9:1 | ○ | ○ |
| Composition 3 | 8:2 | ○ | ○ |
| Composition 4 | 7:3 | ○ | × |
| Composition 5 | 6:4 | ○ | × |
| Composition 6 | 5:5 | ○ | × |
| Composition 7 | 4:6 | × | × |

**[TABLE 2]**

| Thermosetting electrolyte layer | Electrolyte: Oxide (Weight ratio) | Slurry formation | Crosslinking |
|---|---|---|---|
| Composition 1 | 10:0 | ○ | ○ |
| Composition 2 | 9:1 | ○ | ○ |
| Composition 3 | 8:2 | ○ | ○ |
| Composition 4 | 7:3 | ○ | ○ |
| Composition 5 | 6:4 | ○ | ○ |
| Composition 6 | 5:5 | ○ | ○ |
| Composition 7 | 4:6 | × | × |

In the "Slurry formation" of Tables 1 and 2 above, a case where the electrolyte slurry has a high viscosity and can be applied to the release film is indicated as "O". In addition, a case where the electrolyte slurry has very low viscosity and cannot be applied to the release film is indicated as "X".

In the "Crosslinking" of Tables 1 and 2, a case where the solid electrolyte membrane is in a solid state with a defined shape is indicated as "O", and a case where the membrane fails to form a defined shape and remains in a liquid or high-viscosity slurry state is indicated as "X".

Referring to Tables 1 and 2 above, in the case of the photocurable electrolyte composition, the degree of crosslinking of the electrolyte layer decreased with an increase in the content of the oxide-based solid electrolyte. For example, in the case of photocurable electrolyte compositions 4 and 5, in which the content of the oxide-based solid electrolyte was 30 wt% or more based on the total weight of the composition, the electrolyte membrane failed to maintain a defined shape as the degree of crosslinking decreased, and its lower portion remained in a slurry state.

In the case of the thermosetting electrolyte composition, the degree of crosslinking of the electrolyte layer did not decrease even as the content of the oxide-based solid electrolyte increased. For example, even in electrolyte compositions containing 30 wt% or more of the oxide-based solid electrolyte based on the total weight of the composition, a solid-state electrolyte membrane was successfully formed.

Therefore, by forming the second electrolyte layer through a thermosetting process, a high content of the oxide-based solid electrolyte can be used, thereby enhancing the ionic conductivity and electrochemical safety of the polymer electrolyte layer.

### Preparative Example 2

### (1) Preparation of first electrode

A first electrode slurry was prepared by mixing Li[Ni_{0.6}Co_{0.2}Mn_{0.2}]O₂ as an active material, carbon black as a conductive material, and polyvinylidene fluoride (PVdF) as a binder in a weight ratio of 95:2.5:2.5. The first electrode slurry was uniformly applied to an aluminum foil with a thickness of 12 µm, and then vacuum dried at 130 °C. The dried slurry was roll-pressed to prepare a first electrode.

### (2) Preparation of second electrode

A second electrode slurry was prepared by mixing natural graphite as an active material, carbon black as a conductive material, and SBR/CMC as a binder in a weight ratio of 96:1:3. The second electrode slurry was applied to a copper (Cu) foil with a thickness of 10 µm, followed by drying and roll-pressing to prepare a second electrode.

### (3) Manufacture of an electrode structure

### Example 1

Photocurable electrolyte composition 1 was applied to the prepared first electrode and pressed, and then irradiated with UV light having a wavelength of 365 nm and an intensity of 1000 mW/cm² for 10 seconds using an LED lamp to form a first electrolyte layer (thickness: 20 µm).

Thereafter, the second electrode was disposed on the first electrolyte layer with a predetermined gap to form a preliminary electrode cell. The thermosetting electrolyte composition 6 was injected into the preliminary electrode cell, and a crosslinking reaction was performed in a vacuum oven at a temperature of 60 °C for 30 minutes to form a second electrolyte layer (thickness: 40 µm).

The manufactured electrode structure was assembled into a pouch cell outer case.

### Example 2

An electrode structure was manufactured in the same manner as in Example 1, except that thermosetting electrolyte composition 3 was used instead of thermosetting electrolyte composition 6.

### Example 3

An electrode structure was manufactured in the same manner as in Example 1, except that thermosetting electrolyte composition 1 was used instead of thermosetting electrolyte composition 6.

### Comparative Example 1

The photocurable electrolyte composition 1 was applied to the prepared first electrode and pressed, and then irradiated with UV light having a wavelength of 365 nm and an intensity of 1000 mW/cm² for 10 seconds using an LED lamp to form a first composite having a first electrolyte layer (thickness: of 40 µm).

The photocurable electrolyte composition 1 was applied to the second electrode and pressed, and then irradiated UV light having a wavelength of 365 nm and an intensity of 1000 mW/cm² for 10 seconds using an LED lamp to form a second composite having a second electrolyte layer (thickness: of 40 µm).

The first composite and the second composite were bonded such that the first electrolyte layer and the second electrolyte layer faced each other.

The manufactured electrode structure was assembled into a pouch cell outer case.

### Experimental Example 1: Evaluation of interfacial properties

A scanning electron microscope (SEM) image of the cross-section of the manufactured electrode structure was obtained using a scanning electron microscope (Apreo, Thermo Fisher).

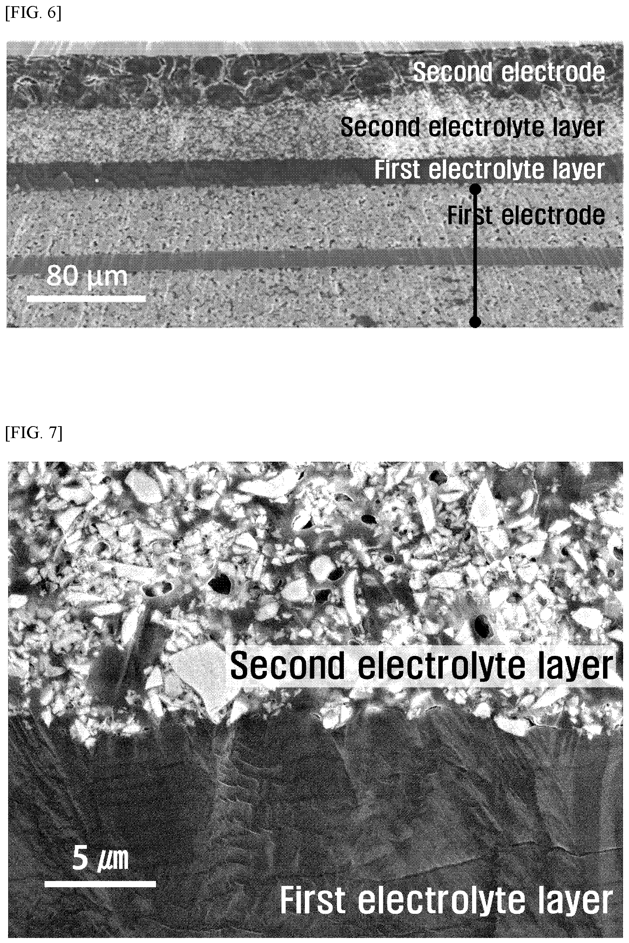

FIG. 6 is an SEM image showing a cross-section of the electrode structure according to Example 1.

Referring to FIG. 6, it can be confirmed that the electrode structure according to Example 1 exhibits strong adhesion at all interfaces within the electrode structure.

FIG. 7 is an SEM image showing a cross-section of the first electrolyte layer and the second electrolyte layer of the electrode structure according to Example 1.

Referring to FIG. 7, the first electrolyte layer and the second electrolyte layer are in close contact with each other, and no delamination or lifting was observed at the interface.

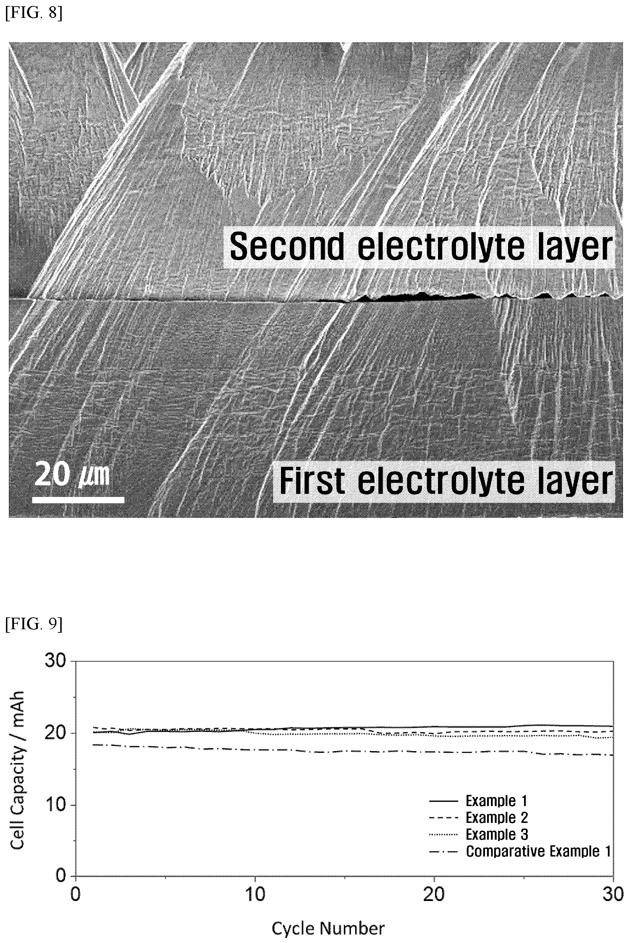

FIG. 8 is an SEM image showing a cross-section of the first electrolyte layer and the second electrolyte layer of the electrode structure according to Comparative Example 1.

Referring to FIG. 8, the adhesion between the first electrolyte layer and the second electrolyte layer was insufficient, and the interface between the electrolyte layers was formed non-uniformly, with gaps and delamination observed between the layers.

### Experimental Example 2: Evaluation of charge/discharge characteristics

A constant current applied charge/discharge evaluation was performed on the manufactured cell. The charge (CC-CV, 0.2 C, 4.2 V cut-off) and discharge (CC, 0.2 C, 2.5 V cut-off) processes at room temperature were conducted as one cycle based on the current density of the first electrode, and the discharge capacity was measured for each cycle.

The measurement results are shown in FIG. 9 and Table 3 below.

**[TABLE 3]**

| Discharge capacity (mAh) | 1 cycle | 10th cycle | 20th cycle | 30th cycle |
|---|---|---|---|---|
| Example 1 | 20.0 | 20.4 | 20.6 | 20.8 |
| Example 2 | 20.7 | 20.6 | 20.0 | 20.2 |
| Example 3 | 20.3 | 20.1 | 19.8 | 19.5 |
| Comparative Example 1 | 18.4 | 17.7 | 17.4 | 17.0 |

Referring to Table 3 and FIG. 9, the lithium secondary battery cells according to the examples exhibited enhanced interlayer adhesion and improved interfacial properties within the electrode structure, and exhibited high initial capacity. In addition, the interface stability was improved, leading to enhanced cycle life characteristics. In Examples 1 and 2, the inclusion of an oxide-based solid electrolyte in the electrolyte layer further improved the safety of the lithium secondary battery.

However, in Comparative Example 1, the overall performance of the secondary battery deteriorated. For example, the interfacial properties between the first electrolyte layer and the second electrolyte layer were degraded, resulting in reduced initial capacity and poorer cycle characteristics of the lithium secondary battery cell.

## Claims

1. An electrode structure for a secondary battery comprising:
a first electrode;
a first electrolyte layer formed on the first electrode and comprising a first polymer electrolyte;
a second electrode disposed on the first electrolyte layer; and
a second electrolyte layer formed between the first electrolyte layer and the second electrode and comprising a second polymer electrolyte, wherein the second electrolyte layer has a different composition or thickness from the first electrolyte layer.

2. The electrode structure for a secondary battery according to claim 1, wherein the first polymer electrolyte comprises a polymer of a photopolymerizable compound and a lithium salt, and the second polymer electrolyte comprises a polymer of a thermosetting compound and a lithium salt.

3. The electrode structure for a secondary battery according to claim 1, wherein the second electrolyte layer further comprises an oxide-based solid electrolyte.

4. The electrode structure for a secondary battery according to claim 3, wherein the first electrolyte layer further comprises an oxide-based solid electrolyte,
wherein a content of the oxide-based solid electrolyte in the first electrolyte layer is lower than that of the oxide-based solid electrolyte in the second electrolyte layer.

5. The electrode structure for a secondary battery according to claim 4, wherein the content of the oxide-based solid electrolyte in the first electrolyte layer is greater than 0% by weight and not more than 30% by weight based on a total weight of the first electrolyte layer.

6. The electrode structure for a secondary battery according to claim 4, wherein the content of the oxide-based solid electrolyte in the second electrolyte layer is less than 70% by weight based on the total weight of the second electrolyte layer.

7. The electrode structure for a secondary battery according to claim 3, wherein the first electrolyte layer does not comprise the oxide-based solid electrolyte.

8. The electrode structure for a secondary battery according to claim 1, wherein a thickness of the second electrolyte layer is greater than that of the first electrolyte layer.

9. The electrode structure for a secondary battery according to claim 1, wherein the first electrode comprises a first electrode current collector and a first electrode active material layer formed on the first electrode current collector.

10. The electrode structure for a secondary battery according to claim 9, wherein the first electrode active material layer comprises the first polymer electrolyte.

11. The electrode structure for a secondary battery according to claim 9, wherein the second electrode comprises a second electrode current collector and a second electrode active material layer formed on the second electrode current collector, and
the second electrode active material layer comprises the second polymer electrolyte.

12. A method for manufacturing an electrode structure for a secondary battery comprising:
irradiating a first electrolyte composition applied to a first electrode with light to form a first electrolyte layer;
disposing a second electrode on the first electrolyte layer with a predetermined gap to form a preliminary electrode structure;
injecting a second electrolyte composition into the preliminary electrode structure to fill a space between the first electrolyte layer and the second electrode; and
heating the preliminary electrode structure to form a second electrolyte layer between the first electrolyte layer and the second electrode.

13. The method for manufacturing an electrode structure for a secondary battery according to claim 12, wherein the first electrolyte composition and the second electrolyte composition each comprises a lithium salt and an organic solvent.

14. The method for manufacturing an electrode structure for a secondary battery according to claim 13, wherein the first electrolyte composition further comprises a photopolymerizable compound and a photoinitiator, and the second electrolyte composition further comprises a thermosetting compound and a thermal initiator.

15. The method for manufacturing an electrode structure for a secondary battery according to claim 14, wherein the second electrolyte composition further comprises an oxide-based solid electrolyte.

16. The method for manufacturing an electrode structure for a secondary battery according to claim 15, wherein the first electrolyte composition further comprises an oxide-based solid electrolyte, and
a content of the oxide-based solid electrolyte in the first electrolyte composition is lower than that of the oxide-based solid electrolyte in the second electrolyte composition.

17. The method for manufacturing an electrode structure for a secondary battery according to claim 15, wherein the first electrolyte composition does not comprise an oxide-based solid electrolyte.

18. The method for manufacturing an electrode structure for a secondary battery according to claim 12, wherein a viscosity of the second electrolyte composition is greater than that of the first electrolyte composition.

19. The method for manufacturing an electrode structure for a secondary battery according to claim 12, wherein a portion of the first electrolyte composition applied to the first electrode is impregnated into the first electrode, and
a crosslinking network derived from the first electrolyte composition is formed between the first electrolyte layer and the first electrode by irradiating the first electrolyte composition with light.

20. The method for manufacturing an electrode structure for a secondary battery according to claim 12, wherein in the step of injecting a second electrolyte composition into the preliminary electrode structure, a portion of the second electrolyte composition is impregnated into the second electrode.
